# EUROPEAN PATENT APPLICATION

(11) **EP 4 447 152 A1**
(43) Date of publication of application: **16.10.2024**
(21) Application number: 22904564.6
(22) Date of filing: 01.12.2022
(51) Int. Cl.: H01M 4/36, H01M 4/38, H01M 4/48, H01M 4/62, H01M 4/134, H01M 4/131, H01M 4/587, H01M 4/1395, H01M 4/1391

(54) **ANODE MATERIAL FOR SECONDARY BATTERY AND PREPARATION METHOD THEREFOR**

(30) Priority: 06.12.2021 KR 20210172786
(71) Applicant: OCI Company Ltd., Seoul 04532 (KR)
(72) Inventor: JEONG, Eunhye, Seongnam-si Gyeonggi-do 13212 (KR); LEE, Seunggwan, Seongnam-si Gyeonggi-do 13212 (KR); CHI, Eunok, Seongnam-si Gyeonggi-do 13212 (KR)
(74) Representative: Zacco Sweden AB
(86) International application number: PCT/KR2022/019391
(87) International publication number: WO 2023/106734

(57) **Abstract**

Disclosed are an anode material for a secondary battery, capable of improving initial discharge capacity, initial efficiency, and lifespan characteristics of the secondary battery, and a preparation method therefor. In the anodematerial for a secondary battery comprising an active material, a conductor, and a binder according to the present invention, the active material comprises a silicon oxide composite having a surface coated with carbon, and the silicon oxide composite comprises silicon oxide (SiOₓ, 0.5<x≤2) nanoparticles and silicon (Si) nanoparticles, and the diameter of first silicon crystal fine particles may differ from the diameter of second silicon crystal fine particles of the silicon (Si) nanoparticles.

## Description

### FIELD

The present disclosure relates to a negative-electrode material for a secondary battery which may improve initial discharge capacity (IDC), initial efficiency (ICE), and lifespan characteristics of the secondary battery, and a method of preparing the same.

### DESCRIPTION OF RELATED ART

As demand for a secondary battery increases, high-capacity and high-output technologies for negative-electrode active materials are required.

The performance improvement of secondary batteries is based on components of a positive-electrode material, a negative-electrode material, and electrolyte. Graphite which is mainly used as the negative-electrode material has a theoretical capacity limited to 370 mAh/g. Thus, development of non-carbon-based negative-electrode materials such as silicon, tin, germanium, and zinc as an alternative to the graphite negative-electrode material is in progress.

Among the non-carbon-based negative-electrode materials, silicon has a theoretical capacity of 4000 to 4200 mAh/g and thus has a capacity of almost 10 times or greater of that of the graphite, and thus is attracting attention as a material to replace the graphite.

However, silicon exhibits a volume expansion of over 300% during the process of intercalating and deintercalating lithium ions. Thus, the cycle characteristics of the secondary battery deteriorate as charging and discharging thereof progresses.

In order to increase the lifespan characteristics of the secondary batteries, a scheme has been used to combine silicon and carbon into composite via a mechanical milling process to prepare the negative-electrode material. However, this scheme has limitations in suppressing volume expansion and contraction that occurs during charging and discharging.

SiOx (0.5<x≤2) has high mechanical strength due to the oxide produced during the initial charge and discharge process. Accordingly, the negative-electrode material including SiOₓ has stability against the volume expansion that occurs during charging and discharging. Thus, many attempts are being made to use the negative-electrode material including SiOₓ to improve the lifespan characteristics of secondary batteries.

However, silicon oxide (SiOₓ) (0.5<x≤2) has the disadvantage of having a large irreversible capacity and low initial efficiency.

Recently, in order to increase the initial efficiency of the secondary batteries, a scheme is being developed to react silicon oxide (SiOₓ) with metal lithium powders to prepare the negative-electrode material. However, this scheme reduces the capacity of the secondary battery and reduces the stability of a slurry (prepared by dispersing the active material and binder in distilled water as a solvent) during a coating process of the slurry on a copper plate for an electrode manufacturing process, thereby making it difficult to mass-produce the negative-electrode material.

Therefore, there is a need for a negative-electrode material for a secondary battery that may improve the initial discharge capacity, initial efficiency, and lifespan characteristics of the secondary battery and may be stably mass-produced.

### DISCLOSURE

### TECHNICAL PURPOSE

A purpose of the present disclosure is to provide a negative-electrode active material with excellent stability against volume expansion of silicon.

A purpose of the present disclosure is to provide a negative-electrode material for a secondary battery that may improve the initial discharge capacity, initial efficiency, and lifespan characteristics of the secondary battery, using the negative-electrode active material.

Furthermore, a purpose of the present disclosure is to provide a method for preparing a negative-electrode material for a secondary battery in which the negative-electrode material may be stably mass-produced.

The purposes of the present disclosure are not limited to the purposes mentioned above, and other purposes and advantages of the present disclosure as not mentioned may be understood based on descriptions as set forth below, and will be more clearly understood based on embodiments of the present disclosure. Furthermore, it will be readily apparent that the purposes and advantages of the present disclosure may be realized by solutions and combinations thereof indicated in the claims.

### TECHNICAL SOLUTION

The present disclosure provides a negative-electrode material for a secondary battery, the negative-electrode material comprising an active material, a conductive material, and a binder, wherein the active material includes a silicon oxide composite having a carbon-coated surface, wherein the silicon oxide composite includes silicon oxide (SiOₓ, 0.5<x≤2) nanoparticles and silicon (Si) nanoparticles, wherein a diameter of a first silicon crystalline fine particle of the silicon oxide nanoparticle and a diameter of a second silicon crystalline fine particle of the silicon (Si) nanoparticle may be different from each other.

The first silicon crystalline fine particle of the silicon oxide nanoparticle may have the diameter in a range of 3 to 20nm.

The second silicon crystalline fine particle of the silicon (Si) nanoparticle may have the diameter in a range of 20 to 50 nm.

The present disclosure provides a method for preparing a negative-electrode material for a secondary battery, the negative-electrode material comprising an active material, a conductive material, and a binder, wherein the method comprises: (a) mixing silicon oxide (SiOₓ, 0.5<x≤2) nanoparticles and silicon (Si) nanoparticles to prepare a first mixture; (b) adding a binder to the first mixture and drying the first mixture having the binder added thereto to prepare a second mixture; (c) heat-treating the second mixture to prepare a silicon oxide composite; and (d) coating carbon on the silicon oxide composite to prepare the active material, wherein a diameter of a first silicon crystalline fine particle of the silicon oxide nanoparticle and a diameter of a second silicon crystalline fine particle of the silicon (Si) nanoparticle may be different from each other.

The diameter of the first silicon crystalline fine particle of the silicon oxide nanoparticle may be in a range of 3 to 20nm.

The diameter of the second silicon crystalline fine particle of the silicon (Si) nanoparticle may be in a range of 20 to 50 nm.

The heat-treatment in the (c) may include: (c1) a first step of increasing a temperature from a room temperature to 500°C; (c2) a second step of maintaining the temperature achieved by the first step to heat-treat the second mixture; (c3) a third step of increasing the temperature from the heat-treatment temperature at the second step to 1200°C; and (c4) a fourth step of maintaining the temperature achieved by the third step to heat-treat the second mixture.

The method may further comprise: after the (d), (e) further mixing the silicon oxide composite and a first carbon material with each other to prepare the active material; and (f) mixing the active material, the conductive material, and the binder with each other to prepare a slurry.

### TECHNICAL EFFECT

According to the present disclosure, the negative-electrode material for the secondary battery includes the negative-electrode active material with excellent stability against volume expansion of silicon, thereby improving the initial discharge capacity, initial efficiency, and lifespan characteristics of the secondary battery.

The method for preparing the negative-electrode material for the secondary battery according to the present disclosure stably mass-produces the negative-electrode active material including the silicon oxide composite.

In addition to the above-mentioned effects, the specific effects of the present disclosure are described below along with the descriptions of the specific details for carrying out the present disclosure.

### BRIEF DESCRIPTION OF DRAWINGS

FIG. 1 is a flowchart showing a method for preparing a negative-electrode material for a secondary battery according to the present disclosure.
FIG. 2 is a cross-sectional photograph of a silicon oxide composite of Present Example 1 according to the present disclosure.
FIG. 3 is a cross-sectional photograph of a silicon oxide composite of Comparative Example 3 according to the present disclosure.

### DETAILED DESCRIPTIONS

The above-described purposes, features and advantages are described in detail below with reference to the drawings and embodiments, so that those skilled in the art in the technical field to which the present disclosure pertains may easily implement the technical ideas of the present disclosure. When describing the present disclosure, when it is determined that a detailed description of the known element or step related to the present disclosure may unnecessarily obscure the gist of the present disclosure, the detailed description thereof is omitted. Hereinafter, a preferred embodiment according to the present disclosure will be described in detail with reference to the attached drawings. In the drawings, identical reference numerals are used to indicate identical or similar components.

It will also be understood that when a first element or layer is referred to as being present "on" a second element or layer, the first element may be disposed directly on the second element or may be disposed indirectly on the second element with a third element or layer being disposed between the first and second elements or layers. It will also be understood that when a first element or layer is referred to as being present "under" a second element or layer, the first element may be disposed directly under the second element or may be disposed indirectly under the second element with a third element or layer being disposed between the first and second elements or layers.

It will be understood that when an element or layer is referred to as being "connected to", or "coupled to" another element or layer, it may be directly connected to or coupled to another element or layer, or one or more intervening elements or layers therebetween may be present. In addition, it will also be understood that when an element or layer is referred to as being "between" two elements or layers, it may be the only element or layer between the two elements or layers, or one or more intervening elements or layers therebetween may also be present.

Hereinafter, a negative-electrode material for a secondary battery and a preparation method thereof according to some embodiments of the present disclosure.

The negative-electrode material for the secondary battery in accordance with the present disclosure includes an active material, a conductive material, and a binder, and the active material includes a densified silicon oxide composite.

The active material includes a highly-densified silicon oxide composite, thereby improving the initial discharge capacity and initial efficiency of the secondary battery.

The silicon oxide composite includes silicon oxide (SiOₓ, 0.5<x≤2) nanoparticles and silicon (Si) nanoparticles.

In the active material, the silicon oxide nanoparticles act as a buffer that suppresses the volume expansion of silicon.

When the silicon oxide nanoparticle or the silicon nanoparticle rather than the silicon oxide composite is used alone as the active material, the silicon nanoparticle reacts with lithium to expand in volume by 300% or greater, which reduces the lifespan characteristics of the secondary battery. Accordingly, when silicon oxide nanoparticles or silicon nanoparticles are used alone, it is difficult to improve the initial discharge capacity, initial efficiency, and life characteristics of the secondary battery. Thus, it is preferred to use the silicon oxide composite in accordance with the present disclosure.

The silicon oxide nanoparticle may be crystalline or/and amorphous. The silicon (Si) nanoparticle may be crystalline.

In accordance with the present disclosure, a nanoparticle refers to a particle with a diameter of 1 µm or smaller, that is, a nanoscale diameter of several nanometers to hundreds of nanometers.

The diameter of each of the silicon oxide nanoparticles and the silicon nanoparticles may have a value equal to or greater than a diameter of a silicon crystal fine particle included in each nanoparticle.

The diameter of each of the silicon oxide nanoparticle and the silicon nanoparticle may be in a range of 5 to 200 nm, for example, 10 to 150 nm, 20 to 100 nm, 30 to 50 nm, or 40 to 50 nm. Preferably, when the diameters of the silicon oxide nanoparticle and the silicon nanoparticle are similar or equal to each other, this is advantageous in terms of sample preparation. When the diameters of the silicon oxide nanoparticles and the silicon nanoparticles are similar or equal to each other, densification progresses in a state in which the dispersibility of the silicon oxide nanoparticles and the silicon nanoparticles in a micro-sized silicon oxide composite based on the silicon oxide nanoparticle and the silicon nanoparticle is secured, thereby improving the battery performance.

The diameter of the nanoparticles may be measured using PSA (Particle Size Analyzer) equipment.

Each of the silicon oxide (SiOₓ, 0.5<x≤2) nanoparticle and the silicon (Si) nanoparticle included in the silicon oxide composite has a silicon crystalline fine particle.

The active material has a structure in which silicon crystalline fine particles of different diameters are dispersed in the silicon oxide composite. Specifically, the active material may have a structure in which silicon crystalline fine particles of different diameters are well dispersed inside and on the surface of the silicon oxide.

In accordance with the present disclosure, the crystalline fine particles of the nanoparticle refer to solid materials that constitute lattices regularly arranged or are randomly arranged in a space that constitutes the nanoparticle. The crystalline fine particle may be used interchangeably with a crystal, a crystal grain, and a crystal particle.

It is preferable that a first silicon crystalline fine particle included in the silicon oxide (SiOₓ, 0.5<x≤2) nanoparticle and a second silicon crystalline fine particle included in the silicon (Si) nanoparticle have different diameters. Further, it is more preferable that the diameter of the first silicon crystalline fine particle is smaller than a diameter of the second silicon crystalline fine particle.

In accordance with the present disclosure, a diameter (size) of the silicon crystalline fine particle is an important factor in improving the characteristics of the secondary battery.

When the diameters of the first silicon crystalline fine particle and the second silicon crystalline fine particle are equal to each other, or when the diameter of the first silicon crystalline fine particle is larger than the diameter of the second silicon crystalline fine particle, the characteristics of the secondary battery as the improvement target according to the present disclosure is insufficiently improved.

In accordance with the present disclosure, the diameter of the first silicon crystalline fine particle of the silicon oxide nanoparticle is preferably in a range of 3 to 20 nm. For example, the diameter of the first silicon crystalline fine particle may be in a range of 10 nm to 20 nm, for example, 15 to 20nm.

The diameter of the second silicon crystalline fine particle of the silicon (Si) nanoparticle is preferably in a range of 20 to 50 nm. For example, the diameter of the second silicon crystalline fine particle may be in a range of 25 to 45 nm, for example, 30 to 40nm.

When the diameter of the first silicon crystalline fine particle is in a range of 3 to 20 nm, and the diameter of the second silicon crystal fine particle is in a range of 20 and 50 nm, uniformity of the silicon oxide nanoparticles and the silicon (Si) nanoparticles in the silicon oxide composite may be secured.

The diameter of the silicon crystalline fine particles may be measured using X-ray diffraction (XRD, Empyrean equipment from Panalytical B.V. (Netherlands)). For example, the FWHM (2θ) value at the crystal peak may be measured based on XRD. The measured value may be used to calculate a crystal size using the XRD FWHM method.

A ratio of a weight of the first silicon crystalline fine particles and a weight of the second silicon crystalline fine particles in the silicon oxide composite may be in a range of 1:0.5 to 1:1, for example, 1:0.8 to 1:1.

The ratio of the weight of the first silicon crystalline fine particles and the weight of the second silicon crystalline fine particles is in a range of 1:0.5 to 1:1. In this case, when the silicon oxide composite is applied, as the negative-electrode material, to the secondary battery, the initial discharge capacity thereof may be improved by about 10% or greater compared to the conventional secondary battery, and the initial efficiency thereof may be improved by about 4% or greater compared to the conventional secondary battery. Accordingly, the secondary battery in accordance with the present disclosure may have improved lifespan characteristics compared to the conventional secondary battery.

Regarding a ratio of weights of the nanoparticles, a ratio of a weight of the silicon oxide nanoparticles and a weigh of the silicon (Si) nanoparticles may be in a range of 1:0.5 to 1:1, for example, 1:0.8 to 1:1.

Furthermore, a molar ratio of oxygen (O) and silicon (Si) in the silicon oxide composite may be in a range of 0.5:1.0 to 1.0:1.0. When the molar ratio of oxygen to silicon is in a range of 0.5 to 1.0, the lifespan characteristics of the secondary battery may be further improved.

The silicon oxide composite as the active material is present in a form in which the first silicon crystalline fine particles and the second silicon crystalline fine particles of different diameters are dispersed inside and on the surface of the silicon oxide. In addition, the silicon oxide composite may not be a simple mixture of the silicon oxide nanoparticles and the silicon (Si) nanoparticles, but may be a highly-densified composite in which the silicon oxide nanoparticles and the silicon (Si) nanoparticles are bonded to each other.

The silicon oxide composite may have the high-density via binder treatment and step-by-step heat-treatment in the preparing method that will be described later. Based on a comparing result of specific surface areas of the nanoparticle as a raw material and the highly-densified silicon oxide composite, the highly-densified silicon oxide composite has a reduced specific surface area.

Furthermore, the silicon oxide composite is highly-densified, thereby improving the initial efficiency and lifespan characteristics of the secondary battery.

The high density may be determined based on a specific surface area (BET) and may provide the effect of suppressing the volume expansion of silicon.

The specific surface area of the silicon oxide composite may be in a range of 1 to 5 m²/g. For example, the specific surface area of the silicon oxide composite may be in a range of 1 to 3 m²/g.

The specific surface area of the silicon oxide composite may be measured according to specific surface area analysis by nitrogen adsorption using the Brunauer-Emmett-Teller (BET) equation (Analysis equipment: BEL Japan lnc, BELSORP-max).

This highly-densified silicon oxide composite preferably has a micrometer size. As the silicon oxide composite has a micrometer size, the first silicon crystalline fine particles and the second silicon crystalline fine particles of different diameters may be uniformly distributed inside and on the surface of the silicon oxide. Furthermore, as the performance of the active material improves, the initial discharge capacity may be improved by about 10% or greater and the initial efficiency may be improved by about 4% or greater, compared to a conventional secondary battery.

Accordingly, the secondary battery in accordance with the present disclosure may have improved lifespan characteristics compared to conventional secondary batteries.

An average diameter (D₅₀) of the silicon oxide composite is preferably in a range of 1 to 50 µm.

For example, the average diameter (D₅₀) of the silicon oxide composite may be in a range of 1 to 45 µm. Specifically, it may be in a range of 1 to 40 µm, 1 to 20 µm, or 3 to 10 µm.

More specifically, it may be in a range of 5 to 8 µm.

The average diameter (D₅₀) of the silicon oxide composite may be defined as a diameter based on 50% of the diameter distribution. The average diameter (D₅0) may be measured using PSA equipment - BECKMAN COULTER life Sciences, LS 13 320 Particle Size Analyzer. For example, after dispersing the silicon oxide composite in a solution, the average diameter of the silicon oxide composite based on 50% of the diameter distribution may be calculated.

The active material constituting the negative-electrode material preferably includes the silicon oxide composite having a carbon-coated surface to prevent oxidation of the silicon (Si) nanoparticles.

The carbon coating layer formed on the surface of the silicon oxide composite may formed on the surface of the Si composite as the insulator using a HSPP (high softening point pitch) and may impart the conductivity thereto. Furthermore, the carbon coating layer has the effect of increasing the stability of the silicon oxide composite and suppressing reactivity thereof to moisture and oxygen. Furthermore, the carbon coating layer acts as a protective film for the silicon oxide composite, thereby lowering interfacial resistance between the negative-electrode material and the electrolyte, and improving interfacial stability over time.

Accordingly, applying the silicon oxide composite having the carbon coating layer formed thereon to the negative-electrode material of the secondary battery may allow charge/discharge efficiency and lifespan characteristics of the secondary battery to be improved.

A second carbon material included in the carbon coating layer may be located on the entire surface of the silicon oxide composite, or may be partially located on the surface thereof. Considering the effect of improving the physical properties of the negative-electrode material, it is desirable that the second carbon material be formed so as to have a uniform thickness along and on the entire surface of the silicon oxide composite.

80 to 95% by weight of the silicon oxide composite and 5 to 20% by weight of the carbon coating layer may be contained with respect to 100% by weight of the silicon oxide composite whose the surface is coated with the carbon. For example, 90 to 95% by weight of the silicon oxide composite and 5 to 10% by weight of the carbon coating layer may be contained with respect to 100% by weight of the silicon oxide composite whose the surface is coated with the carbon. When the content of the carbon coating layer (the second carbon material) is in a range of 5 to 20% by weight, the stability of the silicon oxide composite may be increased, and the interfacial resistance between the negative-electrode material and the electrolyte may be lowered.

Furthermore, when the content of the carbon coating layer is in a range of 5 to 20% by weight, the finally prepared negative-electrode material exhibits sufficient conductivity, such that the decrease in capacity exerted by the negative-electrode material may be minimized. This is because when the carbon content in the negative-electrode material is too high, the content of silicon oxide and silicon (Si) which exert the capacity in the composite decreases.

Conversely, when the content of the carbon coating layer exceeds 20% by weight, a problem may occur in which the initial capacity of the silicon oxide composite is reduced.

A thickness of the carbon coating layer may be in a range of 0.1 to 10 nm. However, embodiments of the present disclosure are not limited thereto.

The second carbon material may include one or more of natural graphite, artificial graphite, mesocarbon microbeads, and the high softening point pitch.

Among these, the pitch is produced by heat-treating the residue obtained by distilling petroleum, and has a high carbonization yield and low impurity content. This pitch has the effect of increasing the charging and discharging efficiency of the secondary battery and increasing the lifespan of the secondary battery.

The high softening point pitch refers to a pitch with a softening point of 200 to 300°C.

The silicon oxide composite may be used alone for the active material that constitutes the negative-electrode material. Alternatively, a combination of the silicon oxide composite and the first carbon material may be used for the active material that constitutes the negative-electrode material.

When the active material includes the combination of silicon oxide composite and a first carbon material, the characteristics of the secondary battery may be further improved, and the conductivity and the lifespan characteristics thereof may be further improved.

In particular, when the active material includes the combination of silicon oxide composite and the first carbon material, this may improve the electrical conductivity between the active materials, improve the electrochemical properties thereof relative to the electrolyte, and reduce the volume expansion of the silicon (Si) nanoparticles to increase the lifespan of the secondary battery.

The first carbon material may include natural graphite, artificial graphite, graphitized carbon fiber, amorphous carbon, etc., which may be commonly used as the negative-electrode active material.

A ratio of a weight of the silicon oxide composite: a weight of the first carbon material in the active material may be in a range of 1:1 to 1:7. For example, the ratio of the weight of silicon oxide composite: the weight of the first carbon material may be in a range of 1:2 to 1:6, or 1:3 to 1:5.

The negative-electrode material for the secondary battery may include a conductive material and a binder in addition to the active material.

The conductive material may be included to impart conductive properties to the negative-electrode material. Thus, the conductive material may be used without limitations thereto as long as it does not cause chemical change and is electrically conductive.

For example, the conductive material may include one or more of tertiary carbon material, metal powder, metal fiber, conductive whisker, metal oxide, and conductive polymer.

The binder plays a role in improving the bonding between the active materials and the adhesion between the active material and the current collector, and may include an aqueous binder among binders commonly used for the negative-electrode material.

For example, the aqueous binder may include one or more of polyvinyl alcohol, starch, polyvinylpyrrolidone, tetrafluoroethylene, polyethylene, polypropylene, acrylic rubber, styrene-butadiene rubber (SBR), regenerated cellulose, hydroxypropyl cellulose, carboxymethyl cellulose (CMC), and fluorine-based rubber.

A ratio of a weight of the active material: a weight of the conductive material: a weight of the binder in the negative-electrode material for the secondary battery may be in a range of 100:1 to 25:1 to 25. For example, the ratio of the weight of active material: the weight of conductive material: the weight of the binder may be in a range of 100:5 to 20:5 to 20, or 100:10 to 20:10 to 20.

In this way, the active material among the negative-electrode materials for the secondary battery in accordance with the present disclosure may include the micrometer-sized highly-densified silicon oxide composite in which the first silicon crystalline fine particles and the second silicon crystalline fine particles of different diameters are dispersed in and on the silicon oxide. Thus, the volume expansion of the silicon particles may be suppressed, and a negative-electrode material with the high capacity may be prepared.

Accordingly, the active material in accordance with the present disclosure is very effective for the negative-electrode material that may improve the characteristics of the energy storage material, and may be applied to a secondary battery using a non-aqueous electrolyte.

In addition, the active material in accordance with the present disclosure may be applied for the negative-electrode material for the secondary battery in an IT product and an electric vehicle.

Another aspect of the present disclosure provides a method for preparing a negative-electrode material for a secondary battery, which will be described in detail below.

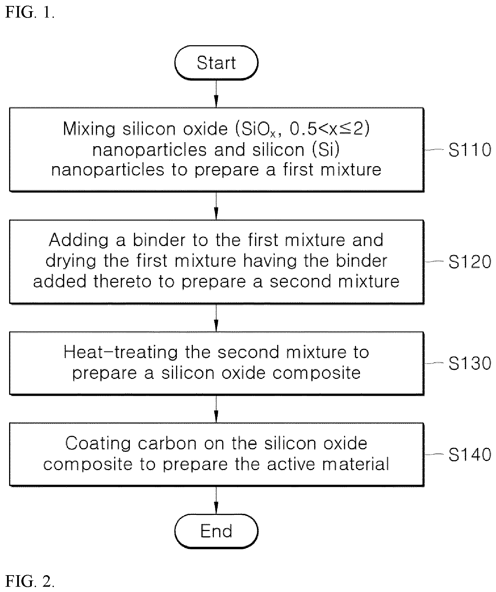

FIG. 1 is a flowchart showing a method for preparing a negative-electrode material for a secondary battery according to the present disclosure.

Referring to FIG. 1, a method for preparing an active material of the negative-electrode material for the secondary battery according to the present disclosure includes a step S 110 of mixing silicon oxide (SiOₓ, 0.5<x≤2) nanoparticles and silicon (Si) nanoparticles with each other to produce a first mixture, a step S 120 of adding a binder to the first mixture and drying the first mixture having the binder to prepare a second mixture, a step S 130 of performing heat-treatment on the second mixture to prepare a silicon oxide composite, and a step S 140 of coating the silicon oxide composite with carbon to prepare the active material.

Afterwards, the silicon oxide composite and the first carbon material are further mixed with each other to prepare the active material. The active material, the conductive material, and the binder are mixed with each other to prepare a slurry. Then, the negative-electrode material may be prepared by coating the slurry on the current collector.

The method of preparing the active material of the negative-electrode material for the secondary battery in accordance with the present disclosure is as follows.

First, the method prepares the first mixture by mixing the silicon oxide (SiOₓ, 0.5<x≤2) nanoparticles and the silicon (Si) nanoparticles with each other.

The first mixture may be prepared by dispersing the silicon oxide nanoparticles and the silicon (Si) nanoparticles in an alcohol-based solvent such as ethanol or/and distilled water, and then pulverizing the nanoparticles via ball milling.

The silicon oxide nanoparticles and the silicon (Si) nanoparticles may be mixed with each other at a weight ratio of 1:0.5 to 1:1. When the ratio of the weight of the silicon oxide nanoparticles and the weight of the silicon (Si) nanoparticles satisfies the above range, the silicon oxide nanoparticles and the silicon (Si) nanoparticles mix well with each other in the silicon oxide composite, such that the highly-densified silicon oxide composite may be obtained.

The dispersing and pulverizing step may be performed for 1 to 10 hours. For example, it may be performed for 1 to 5 hours. When the dispersion and pulverizing time is smaller than 1 hour, the pulverizing effect of the nanoparticles may be insufficient. Conversely, when it exceeds 10 hours, the pulverizing time becomes too long and thus the process may become inefficient.

As described above, it is preferable that the diameter of the first silicon crystalline fine particles of the silicon oxide nanoparticles and the diameter of the second silicon crystalline fine particles of the silicon (Si) nanoparticles are different from each other.

The diameter of the first silicon crystalline fine particles of the silicon oxide nanoparticles may be in a range of 3 to 20 nm. The diameter of the second silicon crystalline fine particles of the silicon (Si) nanoparticles may be in a range of 20 to 50 nm.

Details regarding the silicon oxide nanoparticles, the silicon (Si) nanoparticles, and the silicon crystalline fine particles are the same as described above.

Next, the binder is added to the first mixture in which in turn is dried to prepare the second mixture. Then, the second mixture is heat-treated step by step to prepare the silicon oxide composite.

Specifically, under the step-by-step heat-treatment of the second mixture, the binder on the surface of the silicon oxide nanoparticles and the silicon (Si) nanoparticles and the binder between the interfaces of the nanoparticles burn out, thereby forming pores in sites at which the binder was present, and providing a binding force between the nanoparticles, such that the composite may be highly-densified.

Furthermore, the binder improves the adhesion between the silicon oxide nanoparticles and the silicon (Si) nanoparticles and allows the silicon oxide composite to be formed in a micrometer size.

In this way, the binder affects the density and pore characteristics of the silicon oxide composite. The density and pore characteristics thereof may affect the characteristics of the secondary battery. Therefore, in order to satisfy the initial efficiency and lifespan characteristics of the secondary battery, it is important to add the binder to the first mixture, dry the first mixture having the binder, and then heat-treat the second mixture.

The binder may be an aqueous binder which may include one or more of polyvinyl alcohol, starch, polyvinylpyrrolidone, tetrafluoroethylene, polyethylene, polypropylene, acrylic rubber, styrene-butadiene rubber (SBR), regenerated cellulose, and hydroxypropyl cellulose, carboxymethylcellulose (CMC), and fluorine-based rubber. Preferably, the binder may include one or more of styrene-butadiene rubber (SBR) and carboxymethylcellulose (CMC).

In order to satisfy both the high density and the micrometer size of the silicon oxide composite, 1 to 20 parts by weight of binder may be added based on100 parts by weight of the silicon oxide nanoparticles. For example, 1 to 10 parts by weight of the binder may be added based on100 parts by weight of the silicon oxide nanoparticles. For example, 3 to 8 parts by weight of the binder may be added based on 100 parts by weight of the silicon oxide nanoparticles.

After adding the binder to the first mixture, the first mixture having the binder may be pulverized via ball milling and dispersed and then dried. The pulverizing and dispersion may be performed for 1 to 10 hours, for example, for 1 to 5 hours.

At this time, the dried powder (particles) may be pelletized to prepare the second mixture.

Via the pelletizing, the diameter of the pellets of the second mixture may be larger compared to the diameter of the dried powder (particles). Furthermore, the pelletizing has an advantageous effect in allowing the diameter of the silicon oxide composite to be in a range of a micrometer.

The step of compressing the powders (particles) into the pellets may be performed using any scheme that may compress a material. For example, the pelletizing may be performed using hot pressing, casting, extrusion, etc. However, embodiments of the present disclosure are not limited thereto.

In the step of preparing the silicon oxide composite by stepwise heat-treating the second mixture including the pellets, the stepwise heat-treatment may be performed as follows.

First, the stepwise heat-treatment may be performed as follows: a first step is to increase a temperature from room temperature (25±1°C) to 500°C at an average temperature increase rate of 1 to 5°C/min; a second step is heat-treatment by maintaining the temperature achieved by the first step for 30 minutes to 3 hours; a third step is to increase the temperature from the heat-treatment temperature at the second step to 1200°C at an average temperature increase rate of 10 to 20°C/min; and a fourth step is heat-treatment by maintaining the temperature achieved by the third step for 30 minutes to 3 hours.

Preferably, the first step is to increase the temperature from room temperature to 450 to 550°C, the second step is to maintain the temperature at 450 to 550°C as the temperature range achieved by the first step, the third step is to increase the temperature to 1150 to 1250°C, and the fourth step is to maintain the temperature at 1150 to 1250°C achieved by the fourth step. In this way, the second mixture including pellets may be sintered.

While the temperature is being raised up to around 500°C and up to around 1200°C, the heat-treatment of the second mixture is continuously carried out at the increasing temperature.

In particular, according to the present disclosure, heat-treating the second mixture containing the pellets at around 500°C and then performing the final heat-treatment thereon at a higher temperature around 1200°C may allow the silicon oxide composite to be highly-densified. Furthermore, the high density of the silicon oxide composite has the effect of suppressing the silicon volume expansion and improving the characteristics of the secondary battery. In particular, in the final heat-treatment step, the silicon oxide nanoparticles are decomposed into SiO₂ and Si under disproportionation, such that the silicon crystalline fine particles may be uniformly dispersed.

In this respect, the step-by-step heat-treatment in accordance with the present disclosure is different from a heat-treatment step in a single temperature range at least one time, or a total of two times of heat-treatments at different temperature ranges, which is conventional.

After the step-by-step heat-treatment, first pulverizing is performed with a coarse pulverizing means, and second pulverizing is performed in a ball milling manner, such that the highly-densified silicon oxide composite with an average diameter (D₅₀) of 1 to 50 µm may be prepared.

The pulverizing may be performed for 1 to 10 hours. For example, the pulverizing may be performed for 1 to 5 hours. The average diameter (D₅₀) of the silicon oxide composite is as described above.

Next, the carbon is coated on the silicon oxide composite to prepare the active material.

The carbon coating may be performed to impart conductive properties and may be performed to increase the stability of the silicon oxide composite and suppress its reactivity to moisture and oxygen.

The second carbon material may be wet-coated on the silicon oxide composite and may be subjected to carbonization at 800 to 1200°C and in an inactive atmosphere, such that a carbon coating layer that acts as a protective film may be formed on the surface of the silicon oxide composite.

Specifically, the wet coating may include a first step of dissolving the second carbon material in an organic solvent such as THF to produce a carbon solution, a second step of dissolving the silicon oxide composite in an organic solvent such as THF to produce a silicon oxide composite solution, and a third step of mixing the carbon solution and the silicon oxide composite solution with each other to produce a mixed solution, and removing the solvents therefrom, followed by drying, and then carbonization.

The carbon coating may be performed at 900 to 1100°C. The inactive atmosphere may include one or more of argon (Ar) gas, nitrogen (N₂) gas, helium (He) gas, and xenon (Xe) gas.

5 to 20% by weight of the second carbon material may be added based on 100% by weight of the silicon oxide composite with the carbon-coated surface. For example, 5 to 10% by weight of the second carbon material may be added based on 100% by weight of the silicon oxide composite with the carbon-coated surface.

The second carbon material of the carbon coating layer may include one or more of natural graphite, artificial graphite, mesocarbon microbeads, and high softening point pitch.

After preparing the silicon oxide composite with the carbon-coated surface, the silicon oxide composite and the first carbon material may be mixed with each other at a weight ratio of 1:1 to 1:7. Thus, the active material may be prepared.

Details about the active material including the silicon oxide and the first carbon material are the same as described above.

Subsequently, the slurry is prepared by mixing the active material, the conductive material, and the binder at a weight ratio of 100: 1 to 25: 1 to 25, and then the slurry is coated on the current collector to prepare the negative-electrode material.

Details regarding the ratio of the weight of the active material, the weight of the conductive material, and the weight of the binder are the same as described above.

A material of the current collector may be used without limitation as long as it does not cause chemical change in the secondary battery and is a conductive material. For example, copper, aluminum, nickel, etc. may be used as the material of the current collector.

Hereinafter, specific examples of the negative-electrode material for the secondary battery will be described.

### 1. Preparing silicon oxide composite

### Present Example 1

The silicon oxide nanoparticles (SiOₓ (0.5<x≤2)) (Si crystalline fine particle diameter 3 to 20 nm) with D₅₀ 100 nm were mixed with silicon nanoparticles with D₅₀ 128 nm (Si crystalline fine particle diameter 20 to 50 nm) in a 1:1 weight ratio to prepare the first mixture. Afterwards, ethanol was added to the first mixture which in turn was dispersed therein using a ball mill for 3 hours. A ratio of a weight of the Si crystalline fine particles of the SiOx nanoparticles and a weight of the Si crystalline fine particles of the silicon nanoparticles is 1:1.

Afterwards, 7.5 parts by weight of SBR binder was added to the first mixture based on 100 parts by weight of the silicon oxide nanoparticles, followed by dispersing using a ball mill for 3 hours, and then drying, thereby preparing the second mixture.

The second mixture was dried in a convection oven at 80°C, and the dried powders were pelletized and heat-treated in the four steps. The first step increases the temperature to 500°C at 1°C/min, In the second step, the pellets were maintained at 500°C for 1 hour. The third step increased the temperature at 10°C/min to 1200°C. In the final step, the pellets were sintered at 1200°C for 1 hour.

The sintered pellets were first pulverized with the coarse pulverizing means and then ball-milled to produce a highly-densified silicon oxide composite.

In order to coat the prepared silicon oxide composite with carbon, the high softening point pitch (HSPP, developed by OCI) was wet-coated on the composite so that the carbon content was about 10% by weight based on 100% by weight of the final particles. In the wet-coating, the HSPP was dissolved in THF to produce a HSSP solution, and the composite was dissolved in THF to produce a composite solution, then and the two solutions were mixed with each other to produce a mixed solution which in turn was subjected to evaporation and drying in a double boiling manner at 35 to 40°C using an evaporator.

Subsequently, a carbonization process was performed at 1000°C and under a nitrogen atmosphere. Thus, the silicon oxide composite with the carbon-coated surface was obtained as the final particles.

### Comparative Example 1

A silicon oxide composite with a carbon-coated surface was obtained in the same manner as Present Example 1, except that the heat-treatment was performed in two steps: a first step increased the temperature at 10°C/min to 1200°C, and in a next step, the sintering was performed while maintaining the temperature at 1200°C for 1 hour.

### Comparative Example 2

A silicon oxide composite with a carbon-coated surface was obtained in the same manner as Present Example 1, except that only the silicon oxide nanoparticles (SiOₓ (0.5<x≤2)) (diameter of the Si crystalline fine particles 3 to 20 nm) with D₅₀ 100 nm were used as a staring material.

### Comparative Example 3

A silicon oxide composite with a carbon-coated surface was obtained in the same manner as Present Example 1, except that the binder was not added to the silicon oxide nanoparticles, and the heat-treatment was performed in two steps: a first step increased the temperature at 10°C/min to 1200°C, and in a next step, the sintering was performed while maintaining the temperature at 1200°C for 1 hour.

### 2. Preparing negative-electrode material for secondary battery

The carbon-coated silicon oxide composite of each of Present Example 1 and Comparative Examples 1 to 3 was dry-mixed with artificial graphite at a weight ratio of 1:4.9 to prepare the negative-electrode active material.

Next, the negative-electrode active material: conductive material (artificial graphite): binder (CMC: SBR = 3: 7) were mixed with each other at a weight ratio of 100: 1.1: 5.3 to prepare the slurry.

The prepared slurry was coated on a copper plate so as to have a thickness of 10 µm.

### 3. Physical property evaluation method and results

In the silicon oxide composite of each of Present Example 1 and Comparative Examples 1 to 3, the molar ratio of oxygen to silicon was in a range of 0.9 to 1.0.

Table 1 below indicates the specific surface area, and the diameter of the carbon-coated silicon oxide composite and whether the carbon-coated silicon oxide composite is highly-densified. Table 2 below indicates the electrochemical properties of the negative-electrode material.
1) Specific surface area : BELjapan lnc, BELSORP-max was used to measure the specific surface area of the composite.
2) Whether the carbon-coated silicon oxide composite is highly-densified: The cross-section of the composite was observed with the naked eye using SEM. In this regard, when a content of pores (holes) was smaller than 10%, whether the carbon-coated silicon oxide composite is highly-densified was marked as "O", while when the content exceeded 10%, whether the carbon-coated silicon oxide composite is highly-densified was marked as "X".
3) Diameter: The average diameter (D₅₀) of the composite was measured using a BECKMAN COULTER life Sciences, LS 13 320 Particle Size Analyzer.
4) Initial discharge capacity and initial efficiency: Initial discharge capacity and initial efficiency were measured using half-cell device-TOSCAT-3100 equipment.
5) Lifespan (@50 cycles): Lifespan characteristics were measured using a half cell apparatus - TOSCAT-3100 equipment.

**[Table 1]**

| Examples | Specific surface area (m²/g) | Whether carbon-coated silicon oxide composite is highly-densified | Average diameter (D₅₀) (µm) |
|---|---|---|---|
| Present Example 1 | 3.0 | O | 6 |
| Comparative Example 1 | 21 | X | 11.5 |
| Comparative Example 2 | 3.3 | O | 4.8 |
| Comparative Example 3 | 26 | X | 24 |

**[Table 2]**

| Examples | Initial discharge capacity (mAh/g) | Initial efficiency (%) | Lifespan (@50 cycles) |
|---|---|---|---|
| Present Example 1 | 579 | 86.7 | 89.4% |
| Comparative Example 1 | 565 | 80.2 | 85.7% |
| Comparative Example 2 | 498 | 82.4 | 86.1% |
| Comparative Example 3 | 540 | 77.2 | 60.1% |

Referring to Table 1 and Table 2, in Present Example 1, the four-step heat-treatment was performed on the mixture of the silicon oxide nanoparticles and the silicon nanoparticles in which the silicon crystalline fine particles had different diameters, and binder. Thus, it may be confirmed that the high-density micro-sized composite was prepared.

FIG. 2 is a cross-sectional photo of the silicon oxide composite of Present Example 1, and shows that the silicon oxide composite was highly-densified without agglomeration.

On the contrary, in Comparative Example 1, the heat-treatment was performed in two steps, and thus the high density was not achieved.

In Comparative Example 2, only the silicon oxide nanoparticles were used without the silicon nanoparticles. Thus, the initial discharge capacity of the negative-electrode material exhibited a relatively low value.

In Comparative Example 3 in which the silicon oxide nanoparticles and the silicon nanoparticles were used, the density was not high, such that the initial efficiency and lifetime performance were significantly.

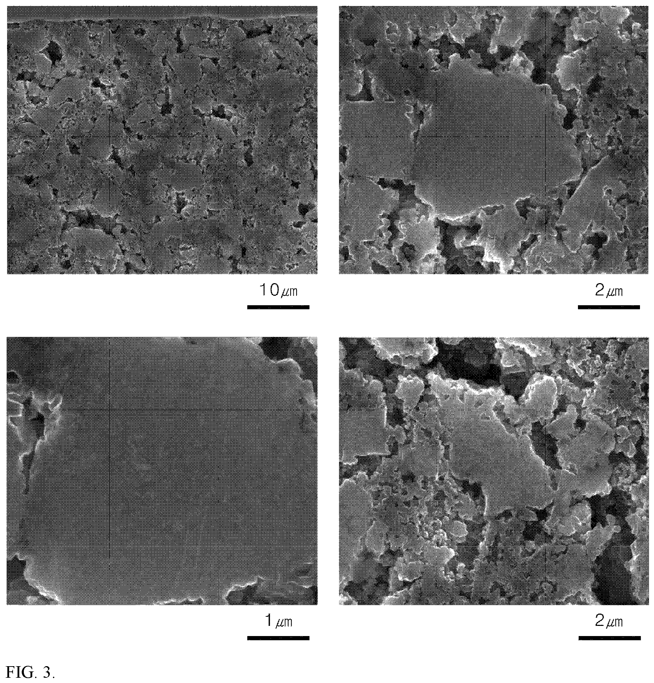

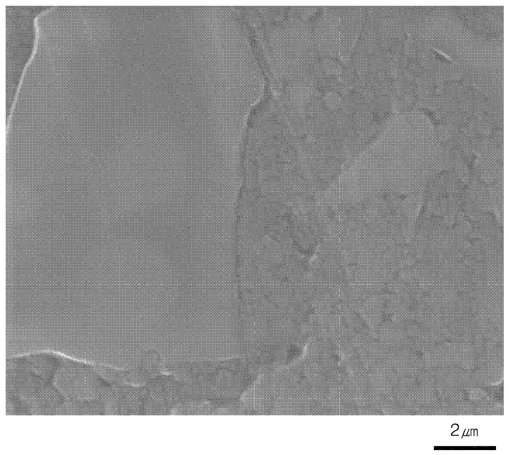

FIG. 3 is a cross-sectional photo of the silicon oxide composite of Comparative Example 3, and shows that there is agglomeration without highly-densification.

Therefore, Present Example 1 of the present disclosure satisfies the characteristics of the silicon crystalline fine particles, the binder treatment, and the step-by-step heat-treatment. Thus, it may be confirmed that the initial discharge capacity, initial efficiency, and lifespan characteristics are further improved compared to Comparative Examples 1 to 3.

The present disclosure has been described above with reference to illustrative drawings. However, the present disclosure is not limited to the embodiments and drawings disclosed in the present disclosure. It is obvious that various modifications may be made thereto by those skilled in the art within the scope of the technical idea of the present disclosure. In addition, even when the effect of the configuration of the present disclosure was not explicitly described while describing the embodiment of the present disclosure, it is natural that the predictable effect from the configuration should be recognized.

## Claims

1. A negative-electrode material for a secondary battery, the negative-electrode material comprising an active material, a conductive material, and a binder,
wherein the active material includes a silicon oxide composite having a carbon-coated surface,
wherein the silicon oxide composite includes silicon oxide (SiOₓ, 0.5<x≤2) nanoparticles and silicon (Si) nanoparticles,
wherein a diameter of a first silicon crystalline fine particle of the silicon oxide nanoparticle and a diameter of a second silicon crystalline fine particle of the silicon (Si) nanoparticle are different from each other.

2. The negative-electrode material for the secondary battery of claim 1, wherein the first silicon crystalline fine particle of the silicon oxide nanoparticle has the diameter in a range of 3 to 20nm.

3. The negative-electrode material for the secondary battery of claim 1, wherein the second silicon crystalline fine particle of the silicon (Si) nanoparticle has the diameter in a range of 20 to 50 nm.

4. The negative-electrode material for the secondary battery of claim 1, wherein an average diameter (D₅₀) of the silicon oxide composite is in a range of 1 to 50 µm.

5. The negative-electrode material for the secondary battery of claim 1, wherein a specific surface area (BET) of the silicon oxide composite is in a range of 1 to 5 m²/g.

6. The negative-electrode material for the secondary battery of claim 1, wherein a molar ratio of oxygen and silicon in the silicon oxide composite is in a range of 0.5:1.0 to 1.0:1.0.

7. The negative-electrode material for the secondary battery of claim 1, wherein the further includes a first carbon material.

8. The negative-electrode material for the secondary battery of claim 1, wherein a ratio of a weight of the silicon oxide composite and a weight of a first carbon material in the active material is in a range of 1:1 to 1:7.

9. The negative-electrode material for the secondary battery of claim 1, wherein a ratio of a weight of the active material, a weight of the conductive material, and a weight of the binder in the negative-electrode material for the secondary battery is in a range of 100: 1 to 25:1 to 25.

10. A method for preparing a negative-electrode material for a secondary battery, the negative-electrode material comprising an active material, a conductive material, and a binder,
wherein the method comprises:
(a) mixing silicon oxide (SiOₓ, 0.5<x≤2) nanoparticles and silicon (Si) nanoparticles to prepare a first mixture;
(b) adding a binder to the first mixture and drying the first mixture having the binder added thereto to prepare a second mixture;
(c) heat-treating the second mixture to prepare a silicon oxide composite; and
(d) coating carbon on the silicon oxide composite to prepare the active material,
wherein a diameter of a first silicon crystalline fine particle of the silicon oxide nanoparticle and a diameter of a second silicon crystalline fine particle of the silicon (Si) nanoparticle are different from each other.

11. The method of claim 10, wherein the diameter of the first silicon crystalline fine particle of the silicon oxide nanoparticle is in a range of 3 to 20nm.

12. The method of claim 10, wherein the diameter of the second silicon crystalline fine particle of the silicon (Si) nanoparticle is in a range of 20 to 50 nm.

13. The method of claim 10, wherein in the (b), 1 to 20 parts by weight of the binder is added based on 100 parts by weight of the silicon oxide nanoparticles.

14. The method of claim 10, wherein the heat-treatment in the (c) includes:
(c1) a first step of increasing a temperature from a room temperature to 500°C;
(c2) a second step of maintaining the temperature achieved by the first step to heat-treat the second mixture;
(c3) a third step of increasing the temperature from the heat-treatment temperature at the second step to 1200°C; and
(c4) a fourth step of maintaining the temperature achieved by the third step to heat-treat the second mixture.

15. The method of claim 10, wherein in each of the (b) and the (c), pulverizing is performed.

16. The method of claim 10, wherein an average diameter (D₅₀) of the silicon oxide composite is in a range of 1 to 50 µm

17. The method of claim 10, wherein the method further comprises: after the (d),
(e) further mixing the silicon oxide composite and a first carbon material with each other at a weight ratio of 1:1 to 1:7 to prepare the active material; and
(f) mixing the active material, the conductive material, and the binder with each other at a weight ratio of 100: 1 to 25: 1 to 25 to prepare a slurry.
